(19) Europäisches Patentamt
European Patent Office
Office européen des brevets

(11) **EP 3 148 063 A1**

(12) **EUROPEAN PATENT APPLICATION**

(43) Date of publication:
**29.03.2017 Bulletin 2017/13**

(51) Int Cl.:
**H02M 1/32** *(2007.01)*   **H02M 3/158** *(2006.01)*
**H02M 3/28** *(2006.01)*   **H02M 3/157** *(2006.01)*

(21) Application number: **16190600.3**

(22) Date of filing: **26.09.2016**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **24.09.2015 DE 102015116184**

(71) Applicant: **IDT Europe GmbH**
**01109 Dresden (DE)**

(72) Inventor: **Kelly, Anthony**
**Old Kildimo Co. Limerick (IE)**

(74) Representative: **Lippert Stachow Patentanwälte**
**Rechtsanwälte**
**Partnerschaft mbB**
**Krenkelstrasse 3**
**01309 Dresden (DE)**

(54) **PREDICTIVE CURRENT SHARE SYSTEM AND CONTROL METHOD FOR CONTROLLING THIS SYSTEM**

(57)   The invention relates to a to a current share system for predicting fault current events comprising parallel DC-DC converters, said converters each comprise a controller and a power stage, connected together for driving a common output voltage, said controllers are connected via a current share bus and also to a method for predicting fault current events in a power stage using the above mentioned system. The objective to provide a system that should be anticipated high current events and take steps to limit them before they occur will be solved thereby that a current share bus is a digital bus for conveying information between the controllers or any low bandwidth loop and the system also comprises a loop utilizing an analogue bus and means for predicting a current in the power stage on a cyclic by cyclic basis. The objective is also solved by a control method for predicting a current in a power stage using the above mentioned system. The method comprising the following steps: predicting a future inductor current $\hat{i}_{L,n+1}$ based upon a present duty cycle $d$ and a measured inductor current $i_{L,n}$; comparing the predicted inductor current $\hat{i}_{L,n+1}$ with a current limit $i_{LIMIT}$; if the predicted current $\hat{i}_{L,n+1}$ exceeds the current limit $i_{LIMIT}$, the duty cycle $d$ is replaced by a duty cycle value that is required to achieve the current limit $i_{LIMIT}$.

Fig. 2

EP 3 148 063 A1

**Description**

The invention relates to a current share system for predicting fault current events comprising parallel DC-DC converters, said converters each comprise a controller and a power stage, connected together for driving a common output voltage, said controllers are connected via a current share bus.

The invention also relates to a method for predicting fault current events in a power stage using the above mentioned system.

In DC-DC conversion it is often convenient to parallel power stages with a common output voltage in order to supply high currents to a load. In this way power conversion can be achieved with scalable and modular components. For example, in point of load (POL) module applications multiple POL modules can be employed in parallel to supply the required current to the load.

Traditionally current share is achieved between parallel converters be means of active or passive methods. In active methods a current share bus is employed between controllers. A load-line is usually introduced for passive methods which can be achieved by introducing a resistor to increase the output resistance of the power converter or by imposing a scheme whereby the voltage set-point of the converter changes in proportion to the output current.

Prior art systems implemented according to passive current share principles often utilize the droop method (see Balogh, L. "Paralleling Power - Choosing and Applying the Best Technique for Load Sharing", Unitrode Design Seminar, 2003). Such methods may introduce resistors in order to increase the output resistance of the power converters to improve matching, or alternatively the voltage-set-point is reduced in proportion the current being delivered, giving the power converter a larger output resistance (or load-line) without incurring the power losses of a physical resistor.

Prior art systems implemented according to active current share principles utilize a common current share bus. Usually this is analogue as described in Chapter 12 of "Dynamic Analysis of Switching-Mode DC/DC Converters" by Kislovski, Redl and Sokal (1991). Digital systems also exist, for example see "System Modeling and Digital Control in Modular Masterless Multi-phase DC-DC Converters" by Yang, Zane and Maksimovic, Power Electronics Specialists Conference, 2006. However the digital bus speed can lead to significant delays in balancing the currents (see for example Figure 10 of Yang et.al 2006). During transient current events these delays can lead to significant current overshoot. Maintaining adequate phase margin can also be a problem.

Active current share methods are preferred because of losses and/or excessive output voltage deviation incurred in passive methods. Active methods require a current controller in each converter and a current share bus to convey information to all of the parallel converters regarding the required set-point for the current being controlled by each converter's current loop.

For an analogue current share bus it is advantageous that the analogue current share bus can react quickly to changes in converter current error, however it can be sensitive to noise. For a digital current share bus it is advantageous that the digital current share bus can be insensitive to noise, but is limited in the transfer rate of data between controllers which limits the reaction time of the current loop leading to excessive mismatch during transients.

Although conveying information about the currents in the power stages by use of a digital communication bus has limitations regarding reaction time of the current control loop, some advantages are granted to the system by the communication bus. For example, devices can communicate fault and status information between one another leading to advantages in reconfiguration and fault management.

It is an objective of the present disclosure to provide a system that may operate such that the system must act so as to limit the inductor current of DC-DC converter to stay within a pre-determined limit. Therefore, the controller involved in this should be anticipated high current events and take steps to limit them before they occur.

This objective is achieved with a current share system for predicting fault current events according to the independent apparatus claim and a control method for predicting a current in a power stage according to the independent method claim. Dependent claims relate to further aspects of the present invention.

The object of the invention is solved thereby that a current share bus is a digital bus for conveying information between the controllers or any low bandwidth loop and the system also comprises a loop utilizing an analogue bus and means for predicting a current in the power stage on a cyclic by cyclic basis. Therefore, the system operates in the presence of a slow digital bus for conveying information between controllers or any low bandwidth loop including a loop utilizing an analogue bus. So, the digital communication bus that is connecting each adaptive controller of each power converter of the plurality of power converters to each other. The communication bus may be configured to communicate the output resistance of each power converter, the current supplied by each power converter or a current share.

Such current predictions shall be advantageous to current share control because they anticipate system currents and therefore may operate in such a low-bandwidth or high-latency system. So, the controller involved in this should be predictive so as to anticipate high current events and take steps to limit them before they occur.

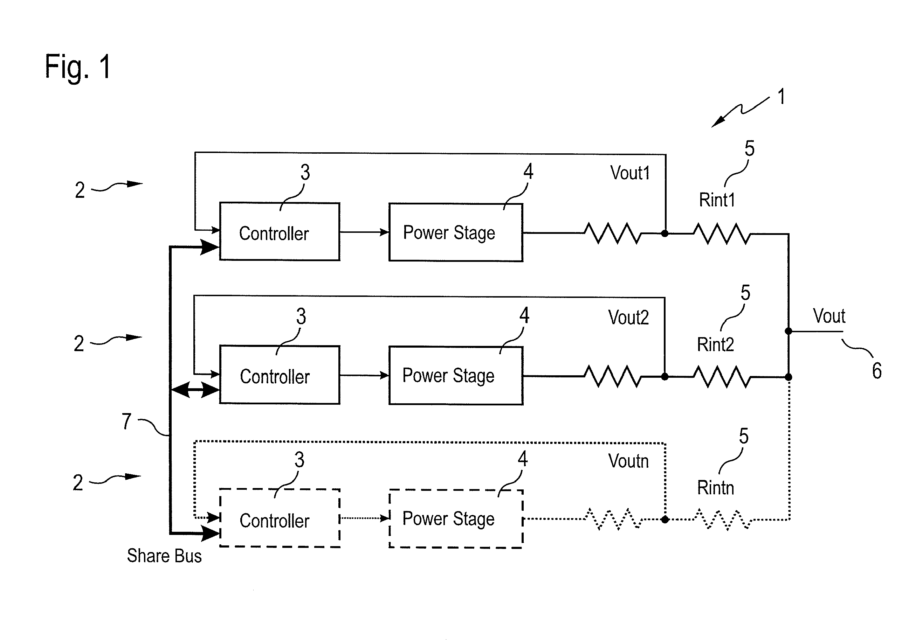

Consider the current share system as shown in Figure 1. Several controllers 3 and power stages 4 drive a common output voltage - $V_{out}$ 6 ($V_{in}$ is omitted for clarity). The share bus 7 serves the purpose of communicating relevant signals and parameters between controllers for the purpose of current share. Additional information relevant for status and configuration may also be communicated on this bus 7. As pointed out, this may be a low speed bus. Also the bus 7 may experience temporary mis-communication which may be detected and removed from the bus 7 so that new data is temporarily delayed. During such routine or transient delays the bus 7 may be required to deliver current share related information such that any delay in reception and processing of such data will result in disturbances in the balance of the shared currents in the power stages 4. This disclosure deals with such occurrences by predicting the current in the power stage 4 on a cycle by cycle basis and taking preventative action to limit unwanted increases in current above a pre-determined threshold, thereby providing an active balance at the threshold and preventing unwanted faults.

Additionally it will be appreciated that a predictive current is advantageous for use in an active current share controller, replacing the measured current. Being predicted in advance, the predictive current signal can improve the dynamic stability of the system by reducing the delay. This is especially advantageous in low cost controllers where the current measurement may have low speed or high latency because the inductor current is predicted at a fast rate with low latency.

In a preferred embodiment of the invention the system comprises means limiting an inductor current of the DC-DC converter 2 to stay within a pre-defined limit. The pre-defined limit is a specific threshold. If the current is predicted to exceed the current limit then the duty cycle is replaced by a duty-cycle value that would be required to achieve the current limit value.

In this way the current is limited to the current limit value when the inductor current is predicted to exceed the current limit threshold and power stages share current at this current limit threshold value.

In another preferred embodiment the controller comprises firmware programmable constants for reducing the complexity of implementation of the system. Once the duty cycle is $V_{in}$ corrected (feedforward) after the predictive block or the means for predicting the inductor current, the calculations are invariant versus $V_{in}$. That is, the correction of duty cycle for $V_{in}$ takes place later in the datapath.

In another embodiment the power stage is configured to generate an output voltage $V_{out}$ from an input voltage $V_{in}$, whereas the output voltage is scalable connected to a feedback voltage divider.

The object of the invention is also solved by a control method for predicting a current in a power stage using the above mentioned system. The method comprising the following steps: predicting a future inductor current $\hat{\imath}_{L,n+1}$ based upon a present duty cycle $d$ and a measured inductor current $i_{L,n}$; comparing the predicted inductor current $\hat{\imath}_{L,n+1}$ with a current limit $i_{LIMIT}$; if the predicted current $\hat{\imath}_{L,n+1}$ exceeds the current limit $i_{LIMIT}$, the duty cycle $d$ is replaced by a duty cycle value that is required to achieve the current limit $i_{LIMIT}$.

Referring to figure 1 several controllers 3 and power stages 4 drive a common output voltage - $V_{out}$ 6. The share bus 7 serves the purpose of communicating relevant signals and parameters between controllers 3 for the purpose of current share. Additional information relevant for status and configuration may also be communicated on this bus 7. As pointed out, this may be a low speed bus. Also the bus may experience temporary mis-communication which may be detected and removed from the bus so that new data is temporarily delayed. During such routine or transient delays the bus may be required to deliver current share related information such that any delay in reception and processing of such data will result in disturbances in the balance of the shared currents in the power stages. The inventive method deals with such occurrences by predicting the current in the power stage on a cycle by cycle basis and taking preventative action to limit unwanted increases in current above a pre-determined threshold, thereby providing an active balance at the threshold and preventing unwanted faults.

Thereby, the predicted inductor current $\hat{\imath}_{L,n+1}$ of the power stage is calculated by

$$\hat{\imath}_{L,n+1} = i_{L,n} + \frac{V_{in}}{L \cdot f_{sw}} d - \frac{V_{out}}{L \cdot f_{sw}}$$ , whereas $V_{in}$ is the input voltage, $V_{out}$ is the output voltage, $L$ is an inductance of the power stage, $d$ is the duty-cycle value and $f_{sw}$ is the switching frequency of the duty cycle. The predictive current controller operates on the principle of predicting the future inductor current $\hat{\imath}_{L,n+1}$ based upon the present duty cycle and the measured inductor current $i_{L,n}$. Thereby, the $\hat{\imath}_{L,n+1}$ is compared to the current limit - which is a specific current threshold. If the current is predicted to exceed the current limit then the duty cycle is replaced by the duty-cycle value that would be required to achieve the current limit value, whereas the duty cycle value d of the system is calculated by

$$d = \frac{L \cdot f_{sw}}{V_{in}} \left( i_{LIMIT} - i_{L,n} \right) + \frac{V_{out}}{V_{in}}$$ .

In this way the current is limited to the current limit value when the inductor current is predicted to exceed the current limit threshold and power stages share current at this current limit threshold value.

In another preferred embodiment the calculations of the predicted inductor current $\hat{\imath}_{L,n+1}$ and duty cycle value $d$ are invariant versus $V_{in}$, whereas a correction of the duty cycle $d$ for $V_{in}$ takes place later in a datapath of the system. So, once the duty cycle is $V_{in}$ corrected (feedforward) after the prediction block or prediction means or predictive current controller, the calculations are invariant versus $V_{in}$. That is, the correction of duty cycle for $V_{in}$ takes place later in the datapath.

Because of this, the following values can be considered to be firmware programmable constants, significantly reducing the complexity of implementation $\frac{V_{in}}{L \cdot f_{sw}}$; $\frac{1}{L \cdot f_{sw}}$; $\frac{L \cdot f_{sw}}{V_{in}}$; $\frac{1}{V_{in}}$ ; so it is advantageously to use for the calculation of the predicted inductor current firmware programmable constants. From an implementation perspective, therefore it is useful to factorize the prediction equation as follows:

$$\hat{\imath}_{L,n+1} = \imath_{L,n} + \frac{V_{in}}{L \cdot f_{sw}}\left( d - \frac{V_{out}}{V_{in}}\right)$$

It is also preferred that the output voltage is scaled by a feedback voltage divider by

$$\hat{\imath}_{L,n+1,SCALED} = \imath_{L,n,SCALED} + \frac{DCR \cdot intgain \cdot igain \cdot OSR_{ana}}{0.768}\frac{V_{in}}{L \cdot f_{sw}}\left( d - \frac{S_{o,ADC} \cdot V_{ref,ADC}}{V_{in} \cdot K_{vdiv}}\right) \, ,$$

whereas DCR is the series resistance of the inductor, intgain, igain, $OSR_{ana}$, $S_{o,ADC}$, $V_{ref,ADC}$ are various parameters associated with the current sense circuit and $K_{v,div}$ is the feedback voltage divider.

$V_{out}$ is represented in terms of the HK-ADC $V_{out}$ measurement as follows: $V_{out} = \frac{S_{o,ADC} \cdot V_{ref,ADC}}{K_{vdiv}}$.

The invention will be explained in more detail using an exemplary embodiment.
The appended drawings show

Fig. 1     A current sharing system ($V_{in}$ omitted for clarity);

Fig. 2     A model of the Predictive Current Controller;

Fig. 3     Operation of the Predictive Current Controller;

Fig. 4     Operation without the Predictive Current Controller;

Fig. 5     Limiting of Current at Startup;

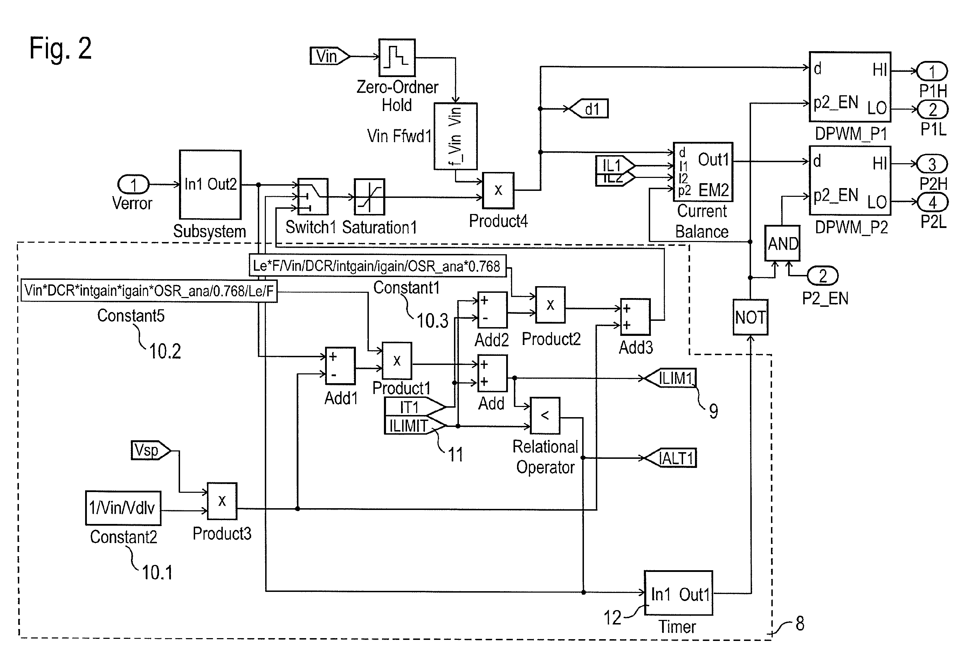

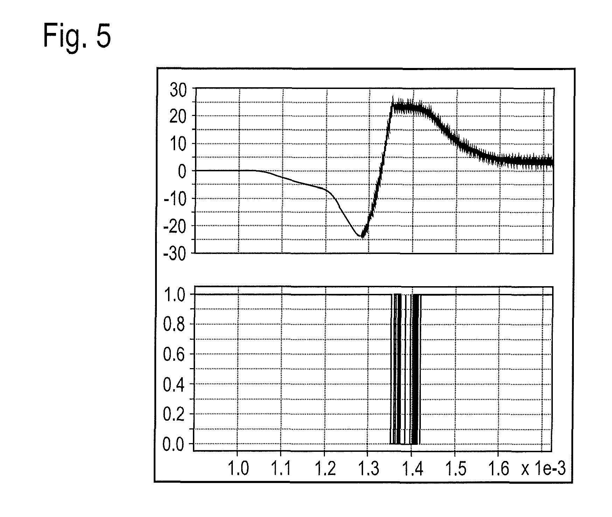

Figure 2 shows a model of a predictive current controller 8. Note that each of the controllers 3 contains such a similar block 8. It is clear that this block 8 performs the calculations to predict the current as described above. Signal ILIM1 9 is the predicted current signal which can be utilized for active current control in several ways: a) figure 2 shows how the predicted current 9 can be compared to a threshold and limited to that threshold value 11; b) controlling the current in a linear manner using a standard current share controller with a predicted (rather than measured) current is also possible; c) both of these techniques may be used together.
The predictive current controller 8 activation can optionally activate a programmable FAULT after a pre-determined time 12 (50μs to 2ms).

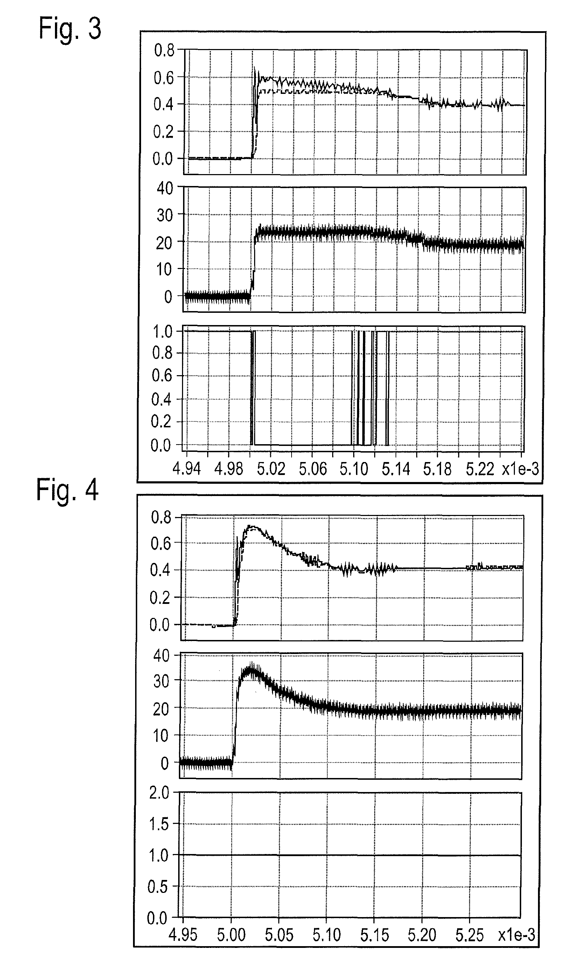

Figure 3 shows how the predicted current (solid line) goes above the current limit threshold (bottom trace - LOW) at the 0.5 threshold. Effectively clamping the inductor current (middle trace and top trace - dashed line). Only one controller's waveforms are shown. The other power stages 4 all limit to the same threshold value 11 and therefore share current at that value.
Figure 4 shows how the current exceeds the threshold when the active clamp is disabled thereby confirming the effectiveness of the invention.
During startup the predictive current controller 8 is effective in limiting the current as shown in figure 5.
The present invention is used for active clamp one-phase and two-phase operation. The equations for the active clamp are invariant when the 2-phase equivalent system is considered. For example, the 1-phase inductor prediction equation:

$$\hat{\imath}_{L,n+1} = \imath_{L,n} + \frac{V_{in}}{L \cdot f_{sw}}\left( d - \frac{V_{out}}{V_{in}}\right)$$

when written as its 2-phase equivalent is:

$$\hat{i}_{L,n+1} = i_{L,n} + \frac{V_{in}/2}{(\frac{L}{2})\cdot 2 f_{sw}}\left( d - \frac{V_{out}}{V_{in}}\right)$$

which is clearly equal to the 1-phase prediction equation.

Therefore the clamp operates correctly for both 1 and 2 phase operation using the 1-phase parameter values, predicting the total current of the POL.

Active clamp will require thresholds for one-phase / two-phase in a similar manner to the current limits; i.e. the two-phase limit will be two times the one-phase limit.

## Reference signs

| | |
|---|---|
| 1 | current share system |
| 2 | DC-DC converter |
| 3 | controller |
| 4 | power stage |
| 5 | interconnect resistance |
| 6 | output voltage |
| 7 | current share bus |
| 8 | predictive means, predictive current controller |
| 9 | predictive current signal |
| 10.1 - 10.3 | firmware programmable constants |
| 11 | threshold limit |
| 12 | timer |

## Claims

1. Current share system (1) for predicting fault current events comprising parallel DC-DC converters (2), said converters (2) each comprise a controller (3) and a power stage (4), connected together for driving a common output voltage (6), said controllers (3) are connected via a current share bus (7), wherein said current share bus (7) is a digital bus for conveying information between the controllers (3) or any low bandwidth loop and the system also comprises a loop utilizing an analogue bus and means for predicting a current in the power stage (4) on a cyclic by cyclic basis.

2. Current share system (1) for predicting fault current events according to claim 1, wherein the system comprises means limiting an inductor current of the DC-DC converter (3) to stay within a pre-defined limit.

3. Current share system (1) for predicting fault current events according to claim 1, wherein the controller (3) comprises firmware programmable constants for reducing the complexity of implementation of the system.

4. Current share system (1) for predicting fault current events according to one of the former claims, wherein the power stage (4) is configured to generate an output voltage $V_{out}$ (6) from an input voltage $V_{in}$, whereas the output voltage (6) is scalable connected to a feedback voltage divider.

5. A control method for predicting a current in a power stage (4) using a system according to claims 1 to 4, wherein the method comprising:

   - predicting a future inductor current $\hat{i}_{L,n+1}$ based upon a present duty cycle $d$ and a measured inductor current $i_{L,n}$;
   - comparing the predicted inductor current $\hat{i}_{L,n+1}$ with a current limit $i_{LIMIT}$;
   - if the predicted current $\hat{i}_{L,n+1}$ exceeds the current limit $i_{LIMIT}$, the duty cycle $d$ is replaced by a duty cycle value that is required to achieve the current limit $i_{LIMIT}$.

6. Method according to claim 5, wherein the predicted inductor current $\hat{i}_{L,n+1}$ of the power stage is calculated by

$$\hat{i}_{L,n+1} = i_{L,n} + \frac{V_{in}}{L\cdot f_{sw}} d - \frac{V_{out}}{L\cdot f_{sw}}$$ , whereas $V_{in}$ is the input voltage, $V_{out}$ is the output voltage, $L$ is an inductance of the power stage, $d$ is the duty-cycle value and $f_{sw}$ is the switching frequency of the duty cycle.

7. Method according to claim 5, wherein the duty cycle value $d$ of the system is calculated by

$$d = \frac{L \cdot f_{sw}}{V_{in}}\left(i_{LIMIT} - i_{L,n}\right) + \frac{V_{out}}{V_{in}} \quad .$$

8. Method according to one of the claims 5 to 7, wherein the calculations of the predicted inductor current $\hat{\imath}_{L,n+1}$ and duty cycle value $d$ are invariant versus $V_{in}$, whereas a correction of the duty cycle $d$ for $V_{in}$, takes place later in a datapath of the system.

9. Method according to one of the former claims, wherein the calculation of the predicted inductor current uses firmware programmable constants.

10. Method according to one of the former claims, wherein the output voltage is scaled by a feedback voltage divider by

$$\hat{\imath}_{L,n+1,SCALED} = i_{L,n,SCALED} + \frac{DCR \cdot intgain \cdot igain \cdot OSR_{ana}}{0.768} \frac{V_{in}}{L \cdot f_{sw}}\left(d - \frac{S_{o,ADC} \cdot V_{ref,ADC}}{V_{in} \cdot K_{vdiv}}\right) ,$$

whereas DCR is the series resistance of the inductor, intgain, igain, $OSR_{ana}$, $S_{o,ADC}$, $V_{ref,ADC}$ are various parameters associated with the current sense circuit and $K_{v,div}$ is the feedback voltage divider.

# Fig. 1

EP 3 148 063 A1

# Fig. 2

EP 3 148 063 A1

Fig. 3

Fig. 4

Fig. 5

**EUROPEAN SEARCH REPORT**

Application Number

EP 16 19 0600

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | WO 02/31943 A2 (PRIMARION INC [US]) 18 April 2002 (2002-04-18) * page 1, line 4 - line 6 * * page 2, line 23 - line 25 * * page 4, line 7 - line 14; figure 2 * * page 4, line 29 - line 32; figure 2 * * page 7, line 13 - line 17; figure 4 * * page 8, line 8 - line 19; figure 4 * * page 9, line 22 - page 10, line 3; figure 4 * * page 9, line 3 - line 9; figure 4 * ----- | 1,2,4-8, 10 | INV. H02M1/32 H02M3/158 H02M3/28 H02M3/157 |
| Y | US 2010/013306 A1 (HEINEMAN DOUGLAS E [US] ET AL) 21 January 2010 (2010-01-21) * paragraph [0053] - paragraph [0055]; figures 6-7 * * paragraph [0069] - paragraph [0070] * ----- | 1,3-5,9 | |
| Y | US 2005/168198 A1 (MAKSIMOVIC DRAGAN [US] ET AL) 4 August 2005 (2005-08-04) * paragraph [0002] * * paragraph [0015] * * paragraph [0047] - paragraph [0048] * ----- | 1-10 | TECHNICAL FIELDS SEARCHED (IPC) H02M |
| Y | US 2013/021009 A1 (WALTMAN BARRY F [US] ET AL) 24 January 2013 (2013-01-24) * abstract; figure 1 * ----- | 4,10 | |

The present search report has been drawn up for all claims

| Place of search | Date of completion of the search | Examiner |
|---|---|---|
| Munich | 3 February 2017 | Barzic, Florent |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

## ANNEX TO THE EUROPEAN SEARCH REPORT
## ON EUROPEAN PATENT APPLICATION NO.

EP 16 19 0600

This annex lists the patent family members relating to the patent documents cited in the above-mentioned European search report.
The members are as contained in the European Patent Office EDP file on
The European Patent Office is in no way liable for these particulars which are merely given for the purpose of information.

03-02-2017

| Patent document cited in search report | | Publication date | Patent family member(s) | | Publication date |
|---|---|---|---|---|---|
| WO 0231943 | A2 | 18-04-2002 | AU | 1158302 A | 22-04-2002 |
| | | | EP | 1325546 A2 | 09-07-2003 |
| | | | JP | 3934050 B2 | 20-06-2007 |
| | | | JP | 2004511868 A | 15-04-2004 |
| | | | TW | 541450 B | 11-07-2003 |
| | | | US | 2002118001 A1 | 29-08-2002 |
| | | | WO | 0231943 A2 | 18-04-2002 |
| US 2010013306 | A1 | 21-01-2010 | CN | 101686013 A | 31-03-2010 |
| | | | CN | 103208796 A | 17-07-2013 |
| | | | DE | 202009009854 U1 | 24-12-2009 |
| | | | TW | 201009559 A | 01-03-2010 |
| | | | US | 2010013306 A1 | 21-01-2010 |
| US 2005168198 | A1 | 04-08-2005 | NONE | | |
| US 2013021009 | A1 | 24-01-2013 | NONE | | |

EPO FORM P0459

For more details about this annex : see Official Journal of the European Patent Office, No. 12/82